# EUROPEAN PATENT APPLICATION

(11) **EP 4 095 542 A2**
(43) Date of publication of application: **30.11.2022**
(21) Application number: 22195942.2
(22) Date of filing: 15.09.2022
(51) Int. Cl.: G01S 5/00, G01S 19/40

(54) **POSITIONING METHOD, ON-BOARD DEVICE,TERMINAL DEVICE AND POSITIONING SYSTEM**

(30) Priority: 16.09.2021 CN 202111089048
(71) Applicant: BEIJING BAIDU NETCOM SCIENCE TECHNOLOGY CO., LTD., Beijing 100085 (CN)
(72) Inventor: LI, Wei, Beijing, 100085 (CN); JIA, Hailu, Beijing, 100085 (CN); CHEN, Xi, Beijing, 100085 (CN); JIANG, Fangsheng, Beijing, 100085 (CN); SHAN, Guangdi, Beijing, 100085 (CN)
(74) Representative: Maiwald GmbH

(57) **Abstract**

A positioning method, an on-board device, a terminal device and a positioning system. The method includes: acquiring (101) positioning data of a vehicle from a satellite and positioning correction data from a base station; acquiring (102) target positioning data of the vehicle by correcting the positioning data based on the positioning correction data; and sending (103) the target positioning data to a terminal device to enable the terminal device to position the vehicle according to the target positioning data.

## Description

### TECHNICAL FIELD

The invention relates to the field of computer technologies, specially the field of artificial intelligence technologies such as automatic driving and intelligent transportation, and in particular to a positioning method, an on-board device, a terminal device and a positioning system.

### BACKGROUND

High-precision positioning technology has begun to enter public view as development of satellite positioning technology, and has been applied in various map scenes, such as a high-precision map and lane-level navigation. However, the existing high-precision positioning technology is applied in limited scenes. For example, smart phones as low to mid-range cannot realize the high-precision positioning.

### SUMMARY

The present invention provides a positioning method, an on-board device, a terminal device and a positioning system.

According to a first aspect of the present invention, there is provided a positioning method, applicable for an on-board device. The method includes: acquiring positioning data of a vehicle from a satellite and positioning correction data from a base station; acquiring target positioning data of the vehicle by correcting the positioning data based on the positioning correction data; and sending the target positioning data to a terminal device to enable the terminal device to position the vehicle according to the target positioning data.

According to a second aspect of the present invention, there is provided a positioning method, applicable for a terminal device. The method includes: receiving target positioning data sent by an on-board device, in which the target positioning data is acquired by correcting positioning data of a vehicle acquired from a satellite based on positioning correction data acquired from a base station; and positioning the vehicle according to the target positioning data.

According to a third aspect of the present invention, there is provided an on-board device. The on-board device includes: at least one processor and a memory communicatively connected to the at least one processor. The memory stores instructions executable by the at least one processor, when the instructions are executed by the at least one processor, the at least one processor is enabled to perform the method according to any one of embodiments of the first aspect.

According to a fourth aspect of the present invention, there is provided a terminal device. The terminal device includes: at least one processor and a memory communicatively connected to the at least one processor. The memory stores instructions executable by the at least one processor, when the instructions are executed by the at least one processor, the at least one processor is enabled to perform the method according to any one of embodiments of the second aspect.

According to a fifth aspect of the present invention, there is provided a positioning system. The system includes an on-board device according to any one of embodiments of the third aspect, and a terminal device according to any one of embodiments of the fourth aspect.

According to a sixth aspect of the present invention, there is provided a non-transitory computer-readable storage medium storing computer instructions. The computer instructions are configured to cause a computer to perform the method according to any one of embodiments of the first aspect or the method according to any one of embodiments of the second aspect.

According to a seventh aspect of the present invention, there is provided a computer program product including a computer program. When the computer program is executed by a processor, the method according to any one of embodiments of the first aspect or the method according to any one of embodiments of the second aspect is implemented.

It should be understood that the content described in this section is not intended to identify the key or important features of the embodiments of the invention, nor is it intended to limit the scope of the invention. Additional features of the invention will be easily understood through the following description.

### BRIEF DESCRIPTION OF THE DRAWINGS

The drawings are used to better understand the solution and do not constitute a limitation of the invention, in which:
FIG. 1 is a flowchart illustrating a positioning method according to a first embodiment of the present invention.
FIG. 2 is a flowchart illustrating a positioning method according to a second embodiment of the present invention.
FIG. 3 is a schematic diagram illustrating an installation position of an on-board device on a vehicle according to a second embodiment of the present invention.
FIG. 4 is a schematic diagram illustrating an application scene of a positioning method according to a second embodiment of the present invention.
FIG. 5 is a schematic diagram illustrating a communication mode between an on-board device and a terminal device according to a second embodiment of the present invention.
FIG. 6 is a flowchart illustrating a positioning method according to a third embodiment of the present invention.
FIG. 7 is a flowchart illustrating a positioning method according to a fourth embodiment of the present invention.
FIG. 8 is a schematic diagram illustrating a display effect of a lane-level position of a vehicle according to a fourth embodiment of the present invention
FIG. 9 is a block diagram illustrating a positioning apparatus applicable for an on-board device according to a fifth embodiment of the present invention.
FIG. 10 is a block diagram illustrating a positioning apparatus applicable for an on-board device according to a sixth embodiment of the present invention.
FIG. 11 is a block diagram illustrating a positioning apparatus applicable for a terminal device according to a seventh embodiment of the present invention.
FIG. 12 is a block diagram illustrating a positioning apparatus applicable for a terminal device according to an eighth embodiment of the present invention.
FIG. 13 is a block diagram illustrating an on-board device or a terminal device for implementing a positioning method according to an embodiment of the present invention.

### DETAILED DESCRIPTION

The exemplary embodiments of the invention are described below in combination with the accompanying drawings, which include various details of the embodiments of the invention to aid in understanding, and should be considered merely exemplary. Therefore, those skilled in the art should know that various changes and modifications may be made to the embodiments described herein without departing from the scope and spirit of the invention. For the sake of clarity and brevity, descriptions of well-known features and structures have been omitted from the following description.

The invention relates to the field of computer technologies, specially the field of artificial intelligence technologies such as automatic driving and intelligent transportation.

A brief description is made on the technical field related to the solution of the present invention below.

AI (Artificial Intelligence) is a subject that studies how to use computers to simulate certain thought processes and intelligent behaviors (such as learning, reasoning, thinking and planning) of humans, which involves both hardware-level technologies and software-level technologies. The AI hardware technologies may include technologies such as sensors, dedicated artificial intelligence chips, cloud computing, distributed storage, big data processing. The AI software technologies may include computer vision, speech recognition, natural language processing, machine/deep learning, big data processing, knowledge graph, and so on.

Automatic driving refers to an auxiliary driving system that may assist a driver to turn and drive in a lane, and realize a series of operations such as following, braking and changing lanes. The driver may control a vehicle at any time, and the system will remind the driver to intervene in the operation under some specific circumstances.

Intelligent transportation is a real-time, accurate and efficient comprehensive traffic and transportation management system playing a role in a wide range and in all directions that is established by effectively integrating and applying an advanced information technology, a data communication and transmission technology, an electronic sensing technology, a control technology and a computer technology to a whole ground traffic management system. The intelligent transportation is composed of traffic information service system and traffic management system.

The existing high-precision positioning technology is applied in limited scenes. For example, smart phones as low to mid-range cannot realize the high-precision positioning. How to realize the high-precision positioning for terminal devices such as the smart phones as low to mid-range is of great significance for expanding the application scenes of the high-precision positioning technology.

The present invention proposes a positioning method capable of enabling a terminal device such as a smart phone and a head unit to realize high-precision positioning for a vehicle, which may be applied to automatic driving and intelligent transportation scenes. The method includes: by an on-board device, acquiring positioning data of the vehicle from a satellite and positioning correction data from a base station, and acquiring target positioning data of the vehicle by correcting the positioning data based on the positioning correction data, and sending the target positioning data to a terminal device to enable the terminal device to position the vehicle according to the target positioning data. Therefore, the on-board device may acquire the high-precision target positioning data based on the positioning data of the vehicle acquired from the satellite and the positioning correction data acquired from the base station, and send the high-precision target positioning data to the terminal device, such that the terminal device may realize the high-precision positioning for the vehicle according to the high-precision target positioning data acquired from the on-board device, thus expanding the application scenes of the high-precision positioning technology.

A positioning method, a positioning apparatus, an on-board device, a terminal device, a positioning system, a non-transitory computer-readable storage medium storing computer instructions, and a computer program product according to embodiments of the present invention will be described below with reference to the accompanying drawings.

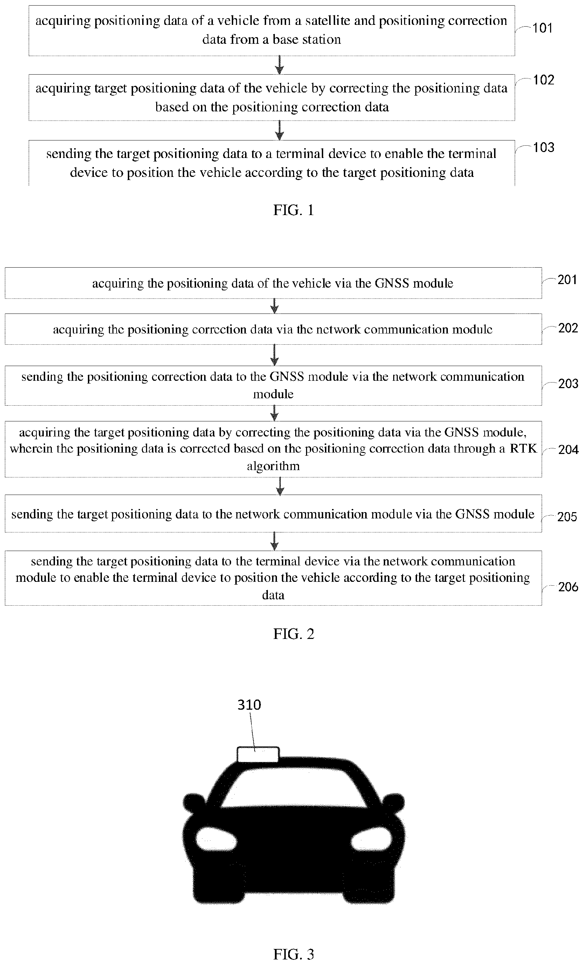

The positioning method applicable for an on-board device provided by the present invention will be described in detail with reference to FIG. 1.

FIG. 1 is a flowchart illustrating a positioning method according to a first embodiment of the present invention. The method provided by an embodiment of the present invention is applicable for an on-board device, capable of enabling a terminal device such as a smart phone and a head unit to realize high-precision positioning for a vehicle.

The on-board device may be any device capable of being configured on the vehicle. For example, the on-board device may be, but not limited to, a drive recorder, a mobile phone support in the vehicle, a three-dimensional decoration outside the vehicle.

As illustrated in FIG. 1, the positioning method may include the following blocks.

At block 101, positioning data of a vehicle from a satellite and positioning correction data from a base station are acquired.

At block 102, target positioning data of the vehicle is acquired by correcting the positioning data based on the positioning correction data.

It is understood that satellite positioning is a common positioning method. Four global satellite positioning systems include BDS (BeiDou Navigation Satellite System) of China, GPS (Global Positioning System) of United States, GLONASS (Global Navigation Satellite System) of Russia, and GALILEO (Galileo satellite navigation system) of European Union. The operation principles of various satellite positioning systems are roughly the same. Taking the GPS as an example, the GPS may be simply understood as consisting of 24 working satellites, more than four satellites of which may be observed anywhere in the world and at any time, and measuring a distance between satellites with known positions and a receiver of a user, and then determining a specific position of the receiver by combining data of multiple satellites.

In an embodiment, the on-board device may acquire a satellite signal from a satellite included in any positioning system of the four global satellite positioning systems to acquire the positioning data of the vehicle.

The positioning data of the vehicle acquired from the satellite may include any data for positioning the vehicle such as longitude, latitude, height above sea level, etc. where the vehicle is located.

It is understood that the satellite signal may be easily affected by factors such as sunspot motion, bad weather, and electromagnetic interference, which are unavoidable. In order to counteract these effects, the base station on the ground may be set to measure a current satellite signal, and calculate the positioning correction data of the satellite signal according to a known real position of the base station and the received satellite signal. The positioning correction data may include the effects of various interference factors, and then may be sent to the receiver by the base station. By correcting the positioning data sent by the satellite based on the positioning correction data, a precise positioning result of the position of the receiver may be acquired.

In an embodiment, the on-board device may acquire the positioning correction data from the base station near the vehicle. The positioning correction data may include improvement parameters from the base station to the satellite. The on-board device may correct the positioning data of the vehicle, based on the positioning correction data, to acquire the high-precision target positioning data of the vehicle.

In an embodiment, the positioning data is corrected based on the positioning correction data through an RTK (real-time kinematic) positioning algorithm or other methods, which will not be limited in the present invention. The RTK algorithm is a mature algorithm, and a process of correcting the positioning data through the RTK algorithm will not be repeated in an embodiment of the present invention.

At block 103, the target positioning data is sent to a terminal device to enable the terminal device to position the vehicle according to the target positioning data.

The terminal device may be any device capable of performing high-precision positioning. For example, the terminal device may be, but not limited to, a smart phone, a head unit, a wearable device, or other devices installed with a positioning application such as a navigation application or a map application.

In an embodiment, the on-board device may send the high-precision target positioning data to the terminal device, such that the terminal device may perform the high-precision positioning for the vehicle according to the target positioning data.

According to the positioning method provided by an embodiment of the present invention, with acquiring the positioning data of the vehicle from the satellite and the positioning correction data from the base station, acquiring the target positioning data of the vehicle by correcting the positioning data based on the positioning correction data, and sending the target positioning data to the terminal device to enable the terminal device to position the vehicle according to the target positioning data. Therefore, the on-board device may acquire the high-precision target positioning data based on the positioning data of the vehicle acquired from the satellite and the positioning correction data acquired from the base station, and send the high-precision target positioning data to the terminal device, such that the terminal device may realize the high-precision positioning for the vehicle according to the high-precision target positioning data acquired from the on-board device, thus expanding application scenes of the high-precision positioning technology.

It can be seen from the above analysis that in an embodiment of the present invention, the on-board device may acquire the positioning data of the vehicle from the satellite and the positioning correction data from the base station, and correct the positioning data of the vehicle based on the positioning correction data, and send the acquired target positioning data to the terminal device. With reference to FIG. 2, the positioning method performed by the on-board device side provided by the present invention may further describe below.

FIG. 2 is a flowchart illustrating a positioning method according to a second embodiment of the present invention. As illustrated in FIG. 2, the positioning method may include the following blocks.

At block 201, the positioning data of the vehicle is acquired via the GNSS module.

At block 202, the positioning correction data is acquired via the network communication module.

The positioning method provided by an embodiment of the present invention may be applicable for an on-board device. The on-board device may be any device capable of being configured on the vehicle. For example, the on-board device may be, but not limited to, a small-sized device, such as, a drive recorder, a mobile phone support in the vehicle, or a three-dimensional decoration outside the vehicle. For example, as illustrated in FIG.3, the on-board device 130 may be a three-dimensional decoration arranged on an exterior roof of the vehicle.

In an embodiment, the on-board device may include a GNSS (Global Navigation Satellite System) module and a network communication module. The GNSS module may receive a satellite signal sent by a satellite in at least one system of BDS, GPS, GLONASS, and GALILEO. The network communication module may receive data sent by any base station.

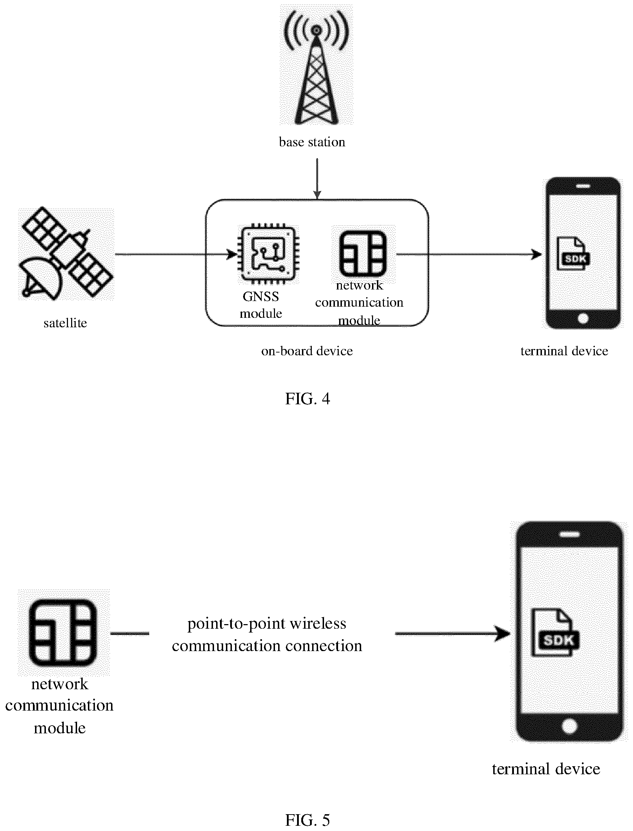

Referring to a schematic diagram of an application scene of the positioning method illustrated in FIG. 4, as illustrated in FIG. 4, the on-board device may include the GNSS module and the network communication module,. The on-board device may receive the satellite signal via the GNSS module to acquire the positioning data of the vehicle, and acquire the positioning correction data from the base station near the vehicle via the network communication module. Therefore, it is possible to acquire the positioning data of the vehicle and the positioning correction data via the on-board device, which lays a foundation for acquiring the high-precision vehicle positioning data.

At block 203, the positioning correction data is sent to the GNSS module via the network communication module.

At block 204, the target positioning data is acquired by correcting the positioning data via the GNSS module. The positioning data is corrected based on the positioning correction data through a real-time kinematic (RTK) positioning algorithm.

In an embodiment, the GNSS module may have a computing function. After acquiring the positioning correction data from the base station via the network communication module, the positioning correction data may be sent to the GNSS module via the network communication module, and the positioning data may be corrected by the GNSS module, to acquire the high-precision target positioning data.

In an embodiment, the positioning data may be corrected based on the positioning correction data through the RTK algorithm. The RTK algorithm has characteristics of real-time and accurate solving, such that the target positioning data may be acquired in real-time and accurately.

In an embodiment, a solving frequency of correcting the positioning data by the GNSS module may be arbitrarily set as required. For example, it may be solved at a frequency of lcps (cycles per second) by the GNSS module to acquire the target positioning data. The solving frequency of the GNSS model may not be limited in embodiments of the present invention.

At block 205, the target positioning data is sent to the network communication module via the GNSS module.

At block 206, the target positioning data is sent to the terminal device via the network communication module to enable the terminal device to position the vehicle according to the target positioning data.

In an embodiment, the network communication module has a communication function. After acquiring the target positioning data by correcting the positioning data via the GNSS module, the target positioning data may be sent to the network communication module, and then the target positioning data may be sent to the terminal device via the network communication module. Therefore, it is capable of implementing that the target positioning data is sent to the terminal device to enable the terminal device to position the vehicle according to the target positioning data.

Referring to FIG. 4, the target positioning data may be sent to the terminal device via the network communication module, to enable the terminal device to position the vehicle according to the target positioning data.

In an embodiment, when the target positioning data is sent to the terminal device through the network communication module, a sending frequency may be arbitrarily set as required, which is not limited in the present invention. For example, the target positioning data may be sent to the terminal device in real time or at a frequency of 1 cps, such that the terminal device may perform real-time positioning for the vehicle according to the target positioning data.

In an embodiment, in order to safely and reliably send the target positioning data to the terminal device, a point-to-point wireless communication connection between the network communication module and the terminal device may be established, so as to send the target positioning data to the terminal device through the point-to-point wireless communication connection between the network communication module and the terminal device.

Correspondingly, before the target positioning data is sent to the terminal device, so that the terminal device locates the vehicle according to the target positioning data, that is, before the block 206, the method may further include:
establishing a point-to-point wireless communication connection between the network communication module and the terminal device.

And sending the target positioning data to the terminal device to enable the terminal device to position the vehicle according to the target positioning data, that is, the block 206, may include:
sending the target positioning data to the terminal device via the point-to-point wireless communication connection between the network communication module and the terminal device.

The point-to-point wireless communication connection may be a Bluetooth connection, or a LAN network connection or other wireless communication connection, or other types of communication connections, which are not limited in the present invention.

In an embodiment, the terminal device may be installed with a positioning application, such as a map application or a navigation application. In order to easily acquire the target positioning data for any positioning application to position the vehicle, a positioning SDK (Software Development Kit) may be developed. The positioning SDK may be included in any positioning application. By sending the target positioning data to the positioning SDK, the positioning application including the positioning SDK may directly acquire the target positioning data from the positioning SDK, so as to perform the high-precision positioning for the vehicle. In addition, after acquiring the target positioning data from the positioning SDK, the positioning application may also display a lane-level position of the vehicle according to the target positioning data received from the positioning SDK.

Correspondingly, sending the target positioning data to the terminal device may include:
sending the target positioning data to the positioning SDK to enable the positioning application to display a lane-level position of the vehicle according to the target positioning data received by the positioning SDK.

Correspondingly, the block 206 may specifically include:
sending the target positioning data to the positioning SDK via the network communication module, such that the terminal device may position the vehicle according to the target positioning data.

Or, the target positioning data is sent to the positioning SDK through the point-to-point wireless communication connection between the network communication module and the positioning SDK.

With reference to FIG. 5, the point-to-point wireless communication connection between the network communication module and the positioning SDK included in the positioning application in the terminal device, and the target positioning data may be sent to the positioning SDK through the point-to-point wireless communication connection between the network communication module and the positioning SDK.

According to an embodiment of the present invention, the positioning data of the vehicle is acquired via the GNSS module, and the positioning correction data is acquired via the network communication module. The positioning correction data is sent to the GNSS module via the network communication module, and the positioning data is corrected via the GNSS module to acquire the target positioning data. The positioning data is corrected based on the positioning correction data through the RTK algorithm. The target positioning data is sent to the network communication module via the GNSS module, and the target positioning data is sent to the terminal device via the network communication module, such that the terminal device may position the vehicle according to the target positioning data. Therefore, the on-board device may acquire the high-precision target positioning data based on the positioning data of the vehicle acquired from the satellite and the positioning correction data acquired from the base station, and send the high-precision target positioning data to the terminal device, such that the terminal device may realize the high-precision positioning for the vehicle according to the high-precision target positioning data acquired from the on-board device, thus expanding application scenes of the high-precision positioning technology.

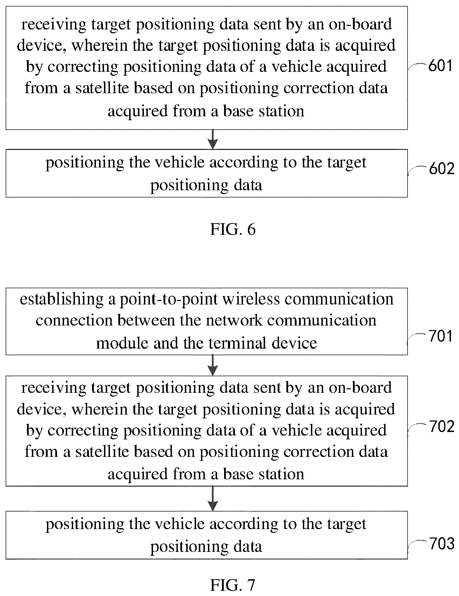

With reference to FIG. 6, description will be made on the positioning method applicable for a terminal device provided by the present invention below.

FIG. 6 is a flowchart illustrating a positioning method according to a third embodiment of the present invention. It is noted that the positioning method provided by an embodiments of the present invention is applicable for a terminal device, such that the terminal device such as a smart phone and a head unit may realize high-precision positioning for a vehicle.

The terminal device may be any device capable of performing high-precision positioning. For example, the terminal device may be, but not limited to, a smart phone, a head unit, a wearable device, or other devices installed with a positioning application such as a navigation application or a map application.

As illustrated in FIG. 6, the positioning method may include the following blocks.

At block 601, target positioning data sent by an on-board device is received. The target positioning data is acquired by correcting positioning data of a vehicle acquired from a satellite based on positioning correction data acquired from a base station.

In an embodiment, the on-board device may acquire a satellite signal from a satellite included in any positioning system of four global satellite positioning systems to acquire the positioning data of the vehicle. The positioning data of the vehicle acquired from the satellite may include any data for positioning the vehicle such as longitude, latitude, height above sea level, etc. where the vehicle is located. In addition, the on-board device may acquire the positioning correction data from the base station near the vehicle. The positioning correction data may include improvement parameters from the base station to the satellite. The on-board device may correct the positioning data of the vehicle, based on the positioning correction data, to acquire the high-precision target positioning data of the vehicle. The on-board device may send the target positioning data to the terminal device after acquiring the high-precision target positioning data of the vehicle, such that the terminal device may receive the target positioning data sent by the on-board device.

At block 602, the vehicle is positioned according to the target positioning data.

It is understood that the target positioning data sent by the on-board device is the high-precision positioning data, such that the terminal device may perform the high-precision positioning for the vehicle according to the target positioning data.

According to the positioning method provided by an embodiment of the present invention, the target positioning data sent by the on-board device is received, and the target positioning data is acquired by correcting the positioning data of the vehicle acquired from the satellite based on the positioning correction data acquired from the base station, and the vehicle is positioned according to the target positioning data. Therefore, the terminal device may realize the high-precision positioning for the vehicle according to the high-precision target positioning data acquired from the on-board device, thus expanding application scenes of the high-precision positioning technology.

It can be seen the above analysis that, in an embodiment of the present invention, the terminal device may receive the target positioning data sent by the on-board device, and position the vehicle according to the target positioning data. In combination with FIG. 7, a process of the terminal device receiving the target positioning data sent by the on-board device in the positioning method performed on the terminal device provided by the present invention will be further described below.

FIG. 7 is a flowchart illustrating a positioning method according to a fourth embodiment of the present invention. As illustrated in FIG. 7, the positioning method may include the following blocks.

At block 701, a point-to-point wireless communication connection between the network communication module and the terminal device is established.

At block 702, the target positioning data sent by the on-board device via the point-to-point wireless communication connection between the network communication module and the terminal device is received. The target positioning data is acquired by correcting the positioning data of the vehicle acquired from the satellite based on the positioning correction data acquired from the base station.

At block 703, the vehicle is positioned according to the target positioning data.

In an embodiment, the on-board device may include a GNSS module and a network communication module. The terminal device may receive the target positioning data sent by the on-board device through the network communication module. In addition, in order to safely and reliably receive the target positioning data sent by the on-board device through the network communication module, the terminal device may establish a point-to-point wireless communication connection between the network communication module and the terminal device, and receive the target positioning data sent by the on-board device through the point-to-point wireless communication connection between the network communication module and the terminal device.

The point-to-point wireless communication connection may be a Bluetooth connection, or a LAN network connection or other wireless communication connection, or other types of communication connections, which are not limited in the present invention.

In an embodiment, the terminal device may be installed with a positioning application, such as a map application or a navigation application. In order to easily acquire the target positioning data for any positioning application to position the vehicle, a positioning SDK (Software Development Kit) may be developed. The positioning SDK may be included in any positioning application. The target positioning data sent by the on-board device may be received through the positioning SDK, and the positioning application including the positioning SDK may directly acquire the target positioning data from the positioning SDK, so as to perform the high-precision positioning for the vehicle.

Correspondingly, the block 701 may include: establishing a point-to-point wireless communication connection between the network communication module and the positioning SDK. The block 702 may include: receiving, by the positioning SDK, the target positioning data sent by the on-board device via the point-to-point wireless communication connection between the network communication module and the positioning SDK.

Further, the positioning SDK may also integrate a positioning sensor inertial navigation function. After receiving, by the positioning SDK, the target positioning data sent by the on-board device, the method may further include: receiving, by the positioning SDK, sensor data sent by a positioning sensor in the terminal device; and performing, by the positioning SDK, inertial navigation during a traveling process of the vehicle based on the sensor data and the target positioning data, and displaying a lane-level position of the vehicle via the positioning application during a navigation process. Thus, by using the sensor data and the high-precision target positioning data for the inertial navigation, the terminal device may realize lane-level navigation with high-precision for the vehicle.

The inertial navigation is to measure an acceleration of a carrier itself via an inertial element (such as an accelerometer) based on Newton's inertial principle, and to acquire a speed and a position through integration and calculation, so as to achieve a purpose of navigation and positioning for the carrier.

The positioning sensor in an embodiment of the present invention may include a sensor in the terminal device that provides data for realizing an inertial navigation function, that is, the above described inertial element such as the accelerometer, a gyroscope, etc. The sensor data is data acquired by the positioning sensor.

A process of performing the inertial navigation during the traveling process of the vehicle based on the sensor data and the target positioning data may refer to the related art, which will not be repeated herein.

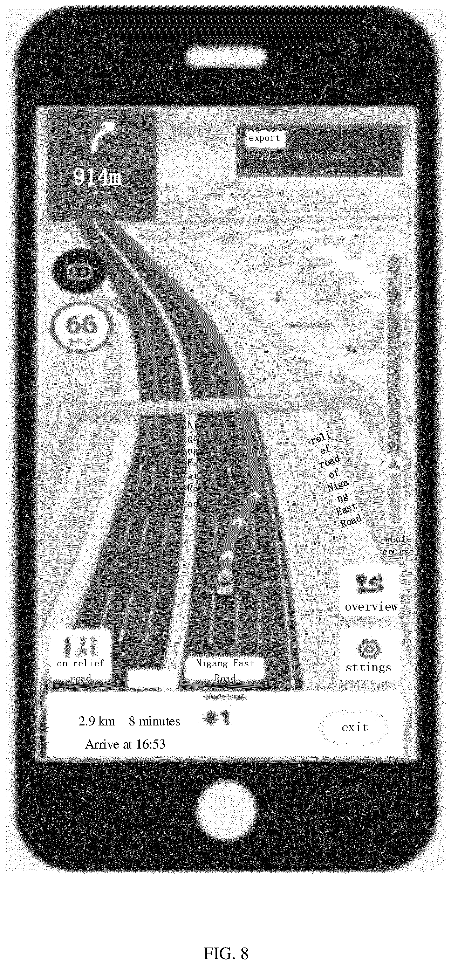

Referring to FIG. 8, when the navigation process is performed by a smart phone during the travelling process of the vehicle, the lane-level position of the vehicle may be displayed through the positioning application.

According to the positioning method provided by an embodiment of the present invention, the point-to-point wireless communication connection between the network communication module and the terminal device is established, the target positioning data sent by the on-board device is received via the point-to-point wireless communication connection between the network communication module and the terminal device, and the vehicle is positioned according to the target positioning data. The target positioning data is acquired by correcting the positioning data of the vehicle acquired from the satellite based on the positioning correction data acquired from the base station. Therefore, the terminal device may realize the high-precision positioning for the vehicle according to the high-precision target positioning data acquired from the on-board device, thus expanding application scenes of the high-precision positioning technology.

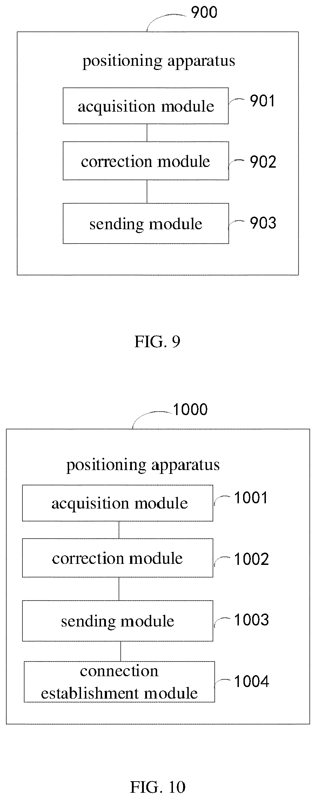

The following describes a positioning apparatus applicable for an on-board device provided in the present invention with reference to FIG. 9.

FIG. 9 is a block diagram illustrating a positioning apparatus applicable for an on-board device according to a fifth embodiment of the present invention.

As illustrated in FIG. 9, the positioning apparatus 900 provided by the present invention may include an acquisition module 901, a correction module 902 and a sending module 903.

The acquisition module 901 is configured to acquire positioning data of a vehicle from a satellite and positioning correction data from a base station;

The correction module 902 is configured to acquire target positioning data of the vehicle by correcting the positioning data based on the positioning correction data; and

The sending module 903 is configured to send the target positioning data to a terminal device to enable the terminal device to position the vehicle according to the target positioning data.

The positioning apparatus provided in this embodiment may perform the positioning method according to any one of embodiments of the first aspect. The positioning apparatus may be an on-board device, or software configured in the on-board device, such that the terminal device such as a smart phone and a head unit may achieve high-precision positioning for the vehicle.

The on-board device may be any device capable of being configured on the vehicle. For example, the on-board device may be, but not limited to, a drive recorder, a mobile phone support in the vehicle, a three-dimensional decoration outside the vehicle.

It should be noted that the positioning apparatus provided in the present invention may refer to the foregoing embodiments of the positioning method for the on-board device, which will not be repeated herein.

According to the positioning apparatus provided by an embodiment of the present invention, with acquiring the positioning data of the vehicle from the satellite and the positioning correction data from the base station, acquiring the target positioning data of the vehicle by correcting the positioning data based on the positioning correction data, and sending the target positioning data to the terminal device to enable the terminal device to position the vehicle according to the target positioning data. Therefore, the on-board device may acquire the high-precision target positioning data based on the positioning data of the vehicle acquired from the satellite and the positioning correction data acquired from the base station, and send the high-precision target positioning data to the terminal device, such that the terminal device may realize the high-precision positioning for the vehicle according to the high-precision target positioning data acquired from the on-board device, thus expanding application scenes of the high-precision positioning technology.

A positioning apparatus applicable for an on-board device provided in the present invention will be further described below with reference to FIG. 10.

FIG. 10 is a block diagram illustrating a positioning apparatus applicable for an on-board device according to a sixth embodiment of the present invention.

As illustrated in FIG. 10, the positioning apparatus 1000 may include an acquisition module 1001, a correction module 1002 and a sending module 1003. The acquisition module 1001, the correction module 1002 and the sending module 1003 in FIG. 10 have same functions and structures as the acquisition module 901, the correction module 902 and the sending module 903 in FIG. 9.

In an embodiment, the on-board device comprises a global navigation satellite system (GNSS) module and a network communication module. The acquisition module 1000 may include:
a first acquisition unit, configured to acquire the positioning data of the vehicle via the GNSS module; and
a second acquisition unit, configured to acquire the positioning correction data via the network communication module.

In an embodiment, the correction module 1002 may include:
a first sending unit, configured to send the positioning correction data to the GNSS module via the network communication module; and
a correction unit, configured to acquire the target positioning data by correcting the positioning data via the GNSS module, in which the positioning data is corrected based on the positioning correction data through a real-time kinematic (RTK) positioning algorithm.

In an embodiment, the correction module 1002 may include:
a second sending unit, configured to send the target positioning data to the network communication module via the GNSS module to enable the network communication module to send the target positioning data to the terminal device.

In an embodiment, the positioning apparatus 1000 may further include:
a connection establishment module 1004, configured to establish a point-to-point wireless communication connection between the network communication module and the terminal device.

Correspondingly, the sending module may further include:
a third sending unit, configured to send the target positioning data to the terminal device via the point-to-point wireless communication connection between the network communication module and the terminal device.

In an embodiment, the terminal device is installed with a positioning application. The positioning application may include a positioning software development kit (SDK). The sending module 1003 may further include:
a fourth sending module, configured to send the target positioning data to the positioning SDK to enable the positioning application to display a lane-level position of the vehicle according to the target positioning data received by the positioning SDK.

It should be noted that the positioning apparatus provided in the present invention may refer to the foregoing embodiments of the positioning method for the on-board device, which will not be repeated herein.

According to the positioning apparatus provided by an embodiment of the present invention, with acquiring the positioning data of the vehicle from the satellite and the positioning correction data from the base station, acquiring the target positioning data of the vehicle by correcting the positioning data based on the positioning correction data, and sending the target positioning data to the terminal device to enable the terminal device to position the vehicle according to the target positioning data. Therefore, the on-board device may acquire the high-precision target positioning data based on the positioning data of the vehicle acquired from the satellite and the positioning correction data acquired from the base station, and send the high-precision target positioning data to the terminal device, such that the terminal device may realize the high-precision positioning for the vehicle according to the high-precision target positioning data acquired from the on-board device, thus expanding application scenes of the high-precision positioning technology.

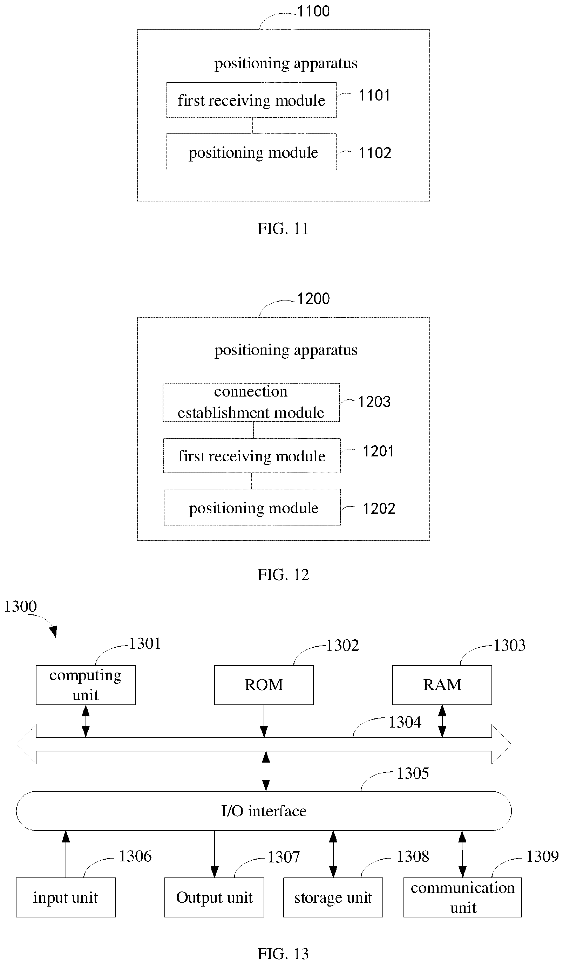

A positioning apparatus applicable for a terminal device provided in the present invention will be further described below with reference to FIG. 11.

FIG. 11 is a block diagram illustrating a positioning apparatus applicable for a terminal device according to a seventh embodiment of the present invention.

As illustrated in FIG. 11, the positioning apparatus 1100 provided by the present invention may include a first receiving module 1101 and a positioning module 1102.

The first receiving module 1101 is configured to receive target positioning data sent by an on-board device, in which the target positioning data is acquired by correcting positioning data of a vehicle acquired from a satellite based on positioning correction data acquired from a base station.

The positioning module 1102 is configured to position the vehicle according to the target positioning data.

It is noted that the positioning apparatus provided in this embodiment may perform the positioning method according to any one of embodiments of the second aspect. The positioning apparatus may be a terminal device, or may be software configured in the terminal device, to enable the terminal device, such as a smart phone, a head unit, to realize high-precision positioning for the vehicle.

The terminal device may be any device capable of performing high-precision positioning. For example, the terminal device may be, but not limited to, a smart phone, a head unit, a wearable device, or other devices installed with a positioning application such as a navigation application or a map application.

It should be noted that the positioning apparatus provided in the present invention may refer to the foregoing embodiments of the positioning method for the terminal device, which will not be repeated herein.

According to the positioning apparatus provided by an embodiment of the present invention, the target positioning data sent by the on-board device is received, and the target positioning data is acquired by correcting the positioning data of the vehicle acquired from the satellite based on the positioning correction data acquired from the base station, and the vehicle is positioned according to the target positioning data. Therefore, the terminal device may realize the high-precision positioning for the vehicle according to the high-precision target positioning data acquired from the on-board device, thus expanding application scenes of the high-precision positioning technology.

A positioning apparatus applicable for a terminal device provided in the present invention will be further described below with reference to FIG. 12.

FIG. 12 is a block diagram illustrating a positioning apparatus applicable for a terminal device according to an eighth embodiment of the present invention.

As illustrated in FIG. 12, the positioning apparatus 1200 provided by the present invention may include a first receiving module 1201 and a positioning module 1202. The first receiving module 1201 and the positioning module 1202 in FIG. 12 have same functions and structures as the first receiving module 1101 and the positioning module 1102 in FIG. 11.

In an embodiment, the on-board device comprises a network communication module.

The apparatus 1200 may further include a connection establishment module 1203, configured to establish a point-to-point wireless communication connection between the network communication module and the terminal device.

Correspondingly, the first receiving module 1201 may further include a first receiving unit, configured to receive the target positioning data sent by the on-board device via the point-to-point wireless communication connection between the network communication module and the terminal device.

In an embodiment, the terminal device is installed with a positioning application, the positioning application comprises a positioning SDK.

The first receiving module may include a second receiving unit, configured to receive, by the positioning SDK, the target positioning data sent by the on-board device.

In an embodiment, the apparatus 1200 may further include:
a second receiving module, configured to receive, by the positioning SDK, sensor data sent by a positioning sensor in the terminal device; and
a navigation module, configured to perform, by the positioning SDK, inertial navigation during a traveling process of the vehicle based on the sensor data and the target positioning data, and display a lane-level position of the vehicle via the positioning application during a navigation process.

It should be noted that the positioning apparatus provided in the present invention may refer to the foregoing embodiments of the positioning method for the terminal device, which will not be repeated herein.

According to the positioning apparatus provided by an embodiment of the present invention, the target positioning data sent by the on-board device is received, and the target positioning data is acquired by correcting the positioning data of the vehicle acquired from the satellite based on the positioning correction data acquired from the base station, and the vehicle is positioned according to the target positioning data. Therefore, the terminal device may realize the high-precision positioning for the vehicle according to the high-precision target positioning data acquired from the on-board device, thus expanding application scenes of the high-precision positioning technology.

According to embodiments of the present invention, the present invention also provides an on-board device, a terminal device, a readable storage medium and a computer program product.

In some embodiments, an on-board device may include: at least one processor; and a memory communicatively connected to the at least one processor.

The memory stores instructions executable by the at least one processor, when the instructions are executed by the at least one processor, the at least one processor is enabled to perform: acquiring positioning data of a vehicle from a satellite and positioning correction data from a base station; acquiring target positioning data of the vehicle by correcting the positioning data based on the positioning correction data; and sending the target positioning data to a terminal device to enable the terminal device to position the vehicle according to the target positioning data.

In an embodiment, the on-board device may further include a global navigation satellite system (GNSS) module and a network communication module.

The network communication module is configured to acquire the positioning correction data from the base station.

The GNSS module is configured to acquire the positioning data of the vehicle from the satellite, and acquire the target positioning data of the vehicle by correcting the positioning data based on the positioning correction data.

The network communication module is further configured to send the target positioning data to the terminal device to enable the terminal device to position the vehicle according to the target positioning data.

In an embodiment, the network communication module is further configured to send the positioning correction data to the GNSS module.

The GNSS module is further configured to acquire the target positioning data by correcting the positioning data based on the positioning correction data through a real-time kinematic (RTK) positioning algorithm.

In an embodiment, the GNSS module is further configured to send the target positioning data to the network communication module to enable the network communication module to send the target positioning data to the terminal device.

In an embodiment, the network communication module is further configured to establish a point-to-point wireless communication connection with the terminal device, and send the target positioning data to the terminal device via the point-to-point wireless communication connection between the network communication module and the terminal device.

In an embodiment, the terminal device is installed with a positioning application, the positioning application comprises a positioning SDK, and the network communication module is further configured to, send the target positioning data to the positioning SDK to enable the positioning application to display a lane-level position of the vehicle according to the target positioning data received by the positioning SDK.

In some embodiments, a terminal device may include at least one processor and a memory communicatively connected to the at least one processor. The memory stores instructions executable by the at least one processor, when the instructions are executed by the at least one processor, the at least one processor is enabled to perform the method according to any one of embodiments of the second aspect.

FIG. 13 is a block diagram illustrating an on-board device or a terminal device 1300 for implementing a positioning method according to an embodiment of the present invention. The on-board device or the terminal device is intended to represent various forms of digital computers, such as laptop computers, desktop computers, workbenches, personal digital assistants, servers, blade servers, mainframe computers, and other suitable computers. The on-board device or the terminal device may also represent various forms of mobile devices, such as personal digital processing, cellular phones, smart phones, wearable devices, and other similar computing devices. The components shown here, their connections and relations, and their functions are merely examples, and are not intended to limit the implementation of the invention described and/or required herein.

As illustrated in FIG. 13, the device 1300 includes a computing unit 1301 performing various appropriate actions and processes based on computer programs stored in a read-only memory (ROM) 1302 or computer programs loaded from the storage unit 13013 to a random access memory (RAM) 1303. In the RAM 1303, various programs and data required for the operation of the device 1300 are stored. The computing unit 1301, the ROM 1302, and the RAM 1303 are connected to each other through a bus 1304. An input/output (I/O) interface 1305 is also connected to the bus 1304.

Components in the device 1300 are connected to the I/O interface 1305, including: an inputting unit 1306, such as a keyboard, a mouse; an outputting unit 1307, such as various types of displays, speakers; a storage unit 1308, such as a disk, an optical disk; and a communication unit 1309, such as network cards, modems, wireless communication transceivers, and the like. The communication unit 1309 allows the device 1300 to exchange information/data with other devices through a computer network such as the Internet and/or various telecommunication networks.

The computing unit 1301 may be various general-purpose and/or dedicated processing components with processing and computing capabilities. Some examples of computing unit 1301 include, but are not limited to, a central processing unit (CPU), a graphics processing unit (GPU), various dedicated artificial intelligence (AI) computing chips, various computing units that run machine learning model algorithms, and a digital signal processor (DSP), and any appropriate processor, controller and microcontroller. The computing unit 1301 executes the various methods and processes described above, such as the method for determining a green wave speed. For example, in some embodiments, the method may be implemented as a computer software program, which is tangibly contained in a machine-readable medium, such as the storage unit 1308. In some embodiments, part or all of the computer program may be loaded and/or installed on the device 1300 via the ROM 1302 and/or the communication unit 1309. When the computer program is loaded on the RAM 1303 and executed by the computing unit 1301, one or more steps of the method described above may be executed. Alternatively, in other embodiments, the computing unit 1301 may be configured to perform the method for determining a green wave speed in any other suitable manner (for example, by means of firmware).

Various implementations of the systems and techniques described above may be implemented by a digital electronic circuit system, an integrated circuit system, Field Programmable Gate Arrays (FPGAs), Application Specific Integrated Circuits (ASICs), Application Specific Standard Products (ASSPs), System on Chip (SOCs), Load programmable logic devices (CPLDs), computer hardware, firmware, software, and/or a combination thereof. These various embodiments may be implemented in one or more computer programs, the one or more computer programs may be executed and/or interpreted on a programmable system including at least one programmable processor, which may be a dedicated or general programmable processor for receiving data and instructions from the storage system, at least one input device and at least one output device, and transmitting the data and instructions to the storage system, the at least one input device and the at least one output device.

The program code configured to implement the method of the invention may be written in any combination of one or more programming languages. These program codes may be provided to the processors or controllers of general-purpose computers, dedicated computers, or other programmable data processing devices, so that the program codes, when executed by the processors or controllers, enable the functions/operations specified in the flowchart and/or block diagram to be implemented. The program code may be executed entirely on the machine, partly executed on the machine, partly executed on the machine and partly executed on the remote machine as an independent software package, or entirely executed on the remote machine or server.

In the context of the invention, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user may provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein may be implemented in a computing system that includes background components (for example, a data server), or a computing system that includes middleware components (for example, an application server), or a computing system that includes front-end components (for example, a user computer with a graphical user interface or a web browser, through which the user may interact with the implementation of the systems and technologies described herein), or include such background components, intermediate computing components, or any combination of front-end components. The components of the system may be interconnected by any form or medium of digital data communication (e.g., a communication network). Examples of communication networks include: local area network (LAN), wide area network (WAN), the Internet and Block-chain network.

The computer system may include a client and a server. The client and server are generally remote from each other and interacting through a communication network. The client-server relation is generated by computer programs running on the respective computers and having a client-server relation with each other. The server may be a cloud server, also known as a cloud computing server or a cloud host, which is a host product in the cloud computing service system, to solve the traditional physical host with a Virtual Private Server (VPS) service, which has the defects of difficult management and weak business expansibility. The server may also be a server for a distributed system, or a server that incorporates a block-chain.

According to an embodiment of the present invention, the present invention further provides a positioning system, including the on-board device and the terminal device as described in the above embodiments.

It should be understood that the various forms of processes shown above may be used to reorder, add or delete steps. For example, the steps described in the invention could be performed in parallel, sequentially, or in a different order, as long as the desired result of the technical solution disclosed in the invention is achieved, which is not limited herein.

The above specific embodiments do not constitute a limitation on the protection scope of the invention. Those skilled in the art should understand that various modifications, combinations, sub-combinations and substitutions may be made according to design requirements and other factors. Any modification, equivalent replacement and improvement made within the principle of the invention shall be included in the protection scope of the invention.

## Claims

1. A positioning method, applicable for an on-board device, comprising:
acquiring (101) positioning data of a vehicle from a satellite and positioning correction data from a base station;
acquiring (102) target positioning data of the vehicle by correcting the positioning data based on the positioning correction data; and
sending (103) the target positioning data to a terminal device to enable the terminal device to position the vehicle according to the target positioning data.

2. The method according to claim 1, wherein the on-board device comprises a global navigation satellite system (GNSS) module and a network communication module;
wherein acquiring (101) the positioning data of the vehicle from the satellite and the positioning correction data from the base station comprises:
acquiring (201) the positioning data of the vehicle via the GNSS module; and
acquiring (202) the positioning correction data via the network communication module.

3. The method according to claim 2, wherein acquiring (102) the target positioning data of the vehicle by correcting the positioning data based on the positioning correction data comprises:
sending (203) the positioning correction data to the GNSS module via the network communication module; and
acquiring (204) the target positioning data by correcting the positioning data via the GNSS module, wherein the positioning data is corrected based on the positioning correction data through a real-time kinematic (RTK) positioning algorithm.

4. The method according to claim 3, after acquiring (204) the target positioning data by correcting the positioning data via the GNSS module, further comprising:
sending (205) the target positioning data to the network communication module via the GNSS module to enable the network communication module to send the target positioning data to the terminal device.

5. The method according to any one of claims 2 to 4, before sending (103) the target positioning data to the terminal device to enable the terminal device to position the vehicle according to the target positioning data, further comprising:
establishing a point-to-point wireless communication connection between the network communication module and the terminal device;
wherein sending (103) the target positioning data to the terminal device to enable the terminal device to position the vehicle according to the target positioning data comprises:
sending the target positioning data to the terminal device via the point-to-point wireless communication connection between the network communication module and the terminal device.

6. The method according to any one of claims 1 to 5, wherein the terminal device is installed with a positioning application, the positioning application comprises a positioning software development kit (SDK), and sending (103) the target positioning data to the terminal device comprises:
sending the target positioning data to the positioning SDK to enable the positioning application to display a lane-level position of the vehicle according to the target positioning data received by the positioning SDK.

7. A positioning method, applicable for a terminal device, comprising:
receiving (601, 702) target positioning data sent by an on-board device, wherein the target positioning data is acquired by correcting positioning data of a vehicle acquired from a satellite based on positioning correction data acquired from a base station; and
positioning (602, 703) the vehicle according to the target positioning data.

8. The method according to claim 7, wherein the on-board device comprises a network communication module;
before receiving (601, 702) the target positioning data sent by the on-board device, the method further comprises:
establishing (701) a point-to-point wireless communication connection between the network communication module and the terminal device;
receiving (601, 702) the target positioning data sent by the on-board device comprises:
receiving the target positioning data sent by the on-board device via the point-to-point wireless communication connection between the network communication module and the terminal device.

9. The method according to claim 7 or 8, wherein the terminal device is installed with a positioning application, the positioning application comprises a positioning SDK, and receiving (601, 702) the target positioning data sent by the on-board device comprises:
receiving, by the positioning SDK, the target positioning data sent by the on-board device.

10. The method according to claim 9, after receiving, by the positioning SDK, the target positioning data sent by the on-board device, further comprising:
receiving, by the positioning SDK, sensor data sent by a positioning sensor in the terminal device; and
performing, by the positioning SDK, inertial navigation during a traveling process of the vehicle based on the sensor data and the target positioning data, and displaying a lane-level position of the vehicle via the positioning application during a navigation process.

11. An on-board device, comprising:
at least one processor; and
a memory communicatively connected to the at least one processor; wherein,
the memory stores instructions executable by the at least one processor, when the instructions are executed by the at least one processor, the at least one processor is enabled to perform the method according to any one of claims 1 to 6.

12. A terminal device, comprising:
at least one processor; and
a memory communicatively connected to the at least one processor; wherein,
the memory stores instructions executable by the at least one processor, when the instructions are executed by the at least one processor, the at least one processor is enabled to perform the method according to any one of claims 7 to 10.

13. A positioning system, comprising an on-board device according to claim 11 and a terminal device according to claim 12.

14. A non-transitory computer-readable storage medium storing computer instructions, wherein the computer instructions are configured to cause a computer to perform the method according to any one of claims 1 to 6 or the method according to any one of claims 7 to 10.

15. A computer program product comprising a computer program, wherein when the computer program is executed by a processor, the method according to any one of claims 1 to 6 or the method according to any one of claims 7 to 10 is implemented.
